# EUROPEAN PATENT SPECIFICATION

(11) **EP 2 099 230 B1**
(45) Date of publication and mention of the grant of the patent: **11.05.2011**
(21) Application number: 08305046.8
(22) Date of filing: 04.03.2008
(51) Int. Cl.: H04Q 3/00, H04L 29/06

(54) **Method and system for enabling an interaction between a terminal user of intelligent TDM network and an intelligent peripheral**
Verfahren und System zur Aktivierung der Interaktion zwischen einem Endbenutzer eines intelligenten TDM-Netzwerks und einem intelligenten Peripheriegerät
Procédé et système pour activer une interaction entre un utilisateur terminal de réseau TDM intelligent et périphérique intelligent

(43) Date of publication of application: 09.09.2009
(73) Proprietor: Alcatel Lucent, 75008 Paris (FR)
(72) Inventor: Goyal, Pankaj, 122002, Gurgaon, Haryana (IN); Ali, Shagufta, 110025, New Delhi (IN)
(74) Representative: Nicolle, Olivier

(56) References cited:
- EP-A- 1 592 217
- KR-A- 20070 052 956

## Description

The invention relates generally to TDM intelligent network, in particular to a method and system enabling a user to interact with a Media Server through a TDM network.

Initially, the unique service offered by traditional telecommunication networks was the setting up of voice calls. But, user demand for value added services such as toll free numbers, prepaid telephone calls or numbers pre-registered on a telephone touch-pad to access special functions, has rapidly grown. To respond to this demand, service providers and manufacturers must continuously create new services in addition to those already available on standard telephone switches. For a long time, the unique way to introduce a service was to add the desired functions directly in the core switch system. Implementation was then fastidious and often provoked important failures in the network. As new services to be implemented have become more and more sophisticated, new architectures and protocols have been developed by the ITU-T (International Telecommunication Union-Telecommunication Standardization Sector) in order to create a scalable and secure network called intelligent networks (IN), where it could be easier to add services.

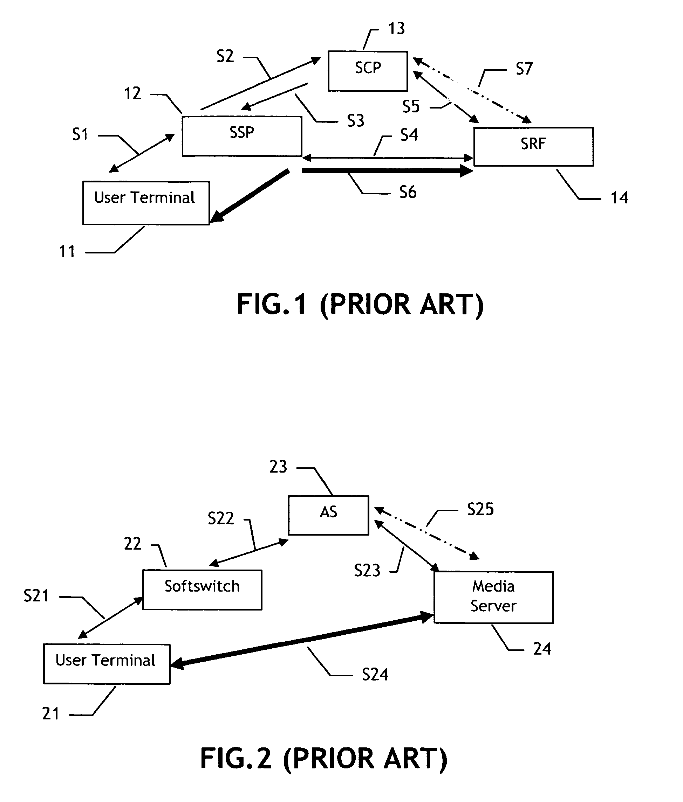

A first type of intelligent network has been deployed in existing TDM networks. Figure 1 shows a schematic architecture of different elements involved in a classical TDM Intelligent Network enabling a user to get access to a specific service. TDM intelligent Network classically comprises:
- a user terminal 11 from which the user can request the service;
- a switching element 12 also known as Service Switching Point (SSP). This element represents the classical network's access point to the Intelligent Network.
- a control element 13 also known as Service Control Point (SCP). This element comprises logical programs and databases in order to enable the network to deliver service to said user terminal 11.
- an intelligent peripheral 14 commonly called SRF according to the Specialized Resource Function that can be delivered by such a peripheral. This peripheral is used to interact with said user terminal.

SSP 12 transmits service request to SCP 13 and, depending on the information received from said SCP, established a link to different elements of the network and in particularly to said SRF 14 so that interaction between said SRF 14 and said terminal user 11 can be realized. By means of this interaction, the user can receive information concerning the service he has requested from SRF 14 and tell more accurately to SRF 14 which part of the service he really needs. Interactions are controlled by said SCP 13 and help said SCP 13 to have service correctly performed. The purpose is to achieve an adaptation of the network resources according to the received user service request in order to realize said service.

More precisely, when a user wants to access a service provided by TDM network, he dials on user terminal 11 the call number of the desired service. A dialogue is then established (Step S1 on figure 1) between terminal user 11 and SSP 12. Upon receiving the dialed number from user terminal 11, SSP 12 sends a message (usually called Initial DP message) to SCP 13 using INAP protocol (Step S2 on figure 1), said message comprising essentially the number dialed on user terminal 11 and the line identification of user terminal 11. SCP comprises databases concerning, among other, user's right, SRF associated functions, service availability information and logical programs. By analysing the Initial DP message, SCP 13 can determine, according to the databases and logical programs it is embedded with, that an interaction is needed between a specific SRF 14 and terminal user 11. SCP 13 then sends an instruction (usually called ETC message for Establish Temporary Connection message) using INAP protocol to SSP 12 telling it how to proceed (Step S3 on figure 1).

This instruction mainly consists in giving the address of SRF 14 which is the most adapted to interact with user terminal 11. Upon reception of said instruction, SSP 13 sends a connection request (usually an IAM request) using ISUP protocol to SRF 14 (Step S4 on figure 1). The connection request essentially comprises called and calling number and type of service (speech or data) to be used. SRF 14 then sends an answer (usually an ARI answer) using INAP protocol to SCP 13 (Step S5 on figure 1). Then SSP 12 establishes a communication path between terminal user 11 and SRF 14 (Step S6 on figure 1). Once this communication path is established between the two elements, SCP 13 controls SRF 14 according to its stored information and logical programs (Step S7 on figure 1) so that said SRF 14 can play the appropriate announcement also known as Play Announcement (PA) in INAP to user terminal 11, and deciphers (Step S7 on figure 1) the user's answer such as DTMF input (Dual-Tone Multi Frequency input), received on SRF 14 using a prompt and collect user input command also known as PCUI in INAP. Announcements sending and user input collecting are performed under control of SCP 13 using INAP protocol and INAP-CS-X interfaces. As already mentioned above, these interactions will enable the network to correctly provide the requested service by sending to user and receiving from user more precisions concerning this service.

Although such a TDM Intelligent Network caters for a sufficient flexibility to service providers and manufacturers to implement new services, this type of network is only fit to transmit services concerning voice or data. Thus, new services involving multimedia applications cannot be implemented. However, these new services are becoming more appreciated by users since they are more sophisticated and complete than conventional TDM services and also more appreciated by service operators and manufacturers because more value adding.

Consequently, new networks currently known as NGN for Next Generation Network have also been developed in order to enable multimedia applications to be supported. These networks typically comprise intelligent peripherals, commonly called Media Servers, which are able to perform automatic speech recognition, text to speech announcements and VoiceXML to control Interactive voice response (IVR) in a Voice over IP environment. Multimedia oriented services can thus be provided to user.

Figure 2 shows a schematic architecture of the various elements which are involved in a NGN Intelligent Network to enable a user to get access to a specific service. NGN intelligent Network classically comprises:
- a user terminal 21 adapted to perform IP oriented exchanges with other elements of said NGN network such as Voice over IP conversation and video over IP broadcasting, and from which the user can request a multimedia service.
- a switching element 22 also known as Softswitch. This element is used to route message and is provided with proxy functions.
- a control element 23 also known as Application Server. This element is commonly known as Application Server AS which handles the business logic and access data of applications which can be delivered by the network. A Service is composed by a plurality of multimedia applications.
- an intelligent peripheral 24 also known as Media Server MS or MRF according to the Multimedia Resource Function that can be delivered by such a peripheral. This peripheral is adapted to perform IP oriented exchanges and is used to interact with said user terminal 21.

Softswitch 22 is the classical network's access point. It is responsible for call routing and triggers Application Server 23 so that it delivers multimedia application or multimedia service corresponding to service initially requested by terminal user 21. Nevertheless, Application Server 23 needs to obtain precision about service requested by terminal user 21 and which type of application terminal user 21 can support. This additional information are transmitted to and collected from terminal user by Media Server 24 associated functions under control of said Application server 23. The purpose is to achieve an assembly of available applications in the network according to the received user service request in order to realize said service.

More precisely, when a user wants to access a service provided by NGN network, he dials on user terminal 21 the call number of the desired service. Then a dialogue is established between terminal user 21 and Softswitch 22 (Step S21 on figure 2). Upon receiving the dialed number from user terminal 21, Softswitch 22 triggers Application Server 23 so that it provides requested service (Step S22 on figure 2). During triggering, information about application available on terminal user 21 such as media and codec used or available are transmitted to Application Server 23. Application Server 23 contains databases comprising user rights, Media Server 24 associated function, application and service availability information and business logic. Once triggered, Application Server 23 determines, according to business logic and access data it is handled with, that an interaction is needed between a specific Media Server 24 and terminal user 21.

Application Server 23 then establishes a SIP (Session Initiation protocol) session between said Application Server 23 and said Media Server 24 using a B2BUA (Back to Back User Agent) functionality for handling signalisation information between Application Server 23 and Media Server 24 (Step S23 on figure 2). The Session is mainly used for giving address of user terminal 21 and exchanging information about media and codec available on user terminal 21 and Media Server 24 by establishing an SDP session (Session Description Protocol) inside said SIP session. Once common parameters and flow transmission type such as media and/or codec have been chosen to perform an appropriate transmission between user terminal 21 and Media Server 24, a RTP (Real-time Transport Protocol) path is established between these two elements (Step S24 on figure 2). Using this RTP path, Media server 24 can then send/receive audio or video information in an adapted packet format to/from said terminal user.

Once this RTP communication path is established between the two elements, Application Server 23 controls Media Server 24, by using SIP info messages with embedded MSML (Media Session Markup language) commands, according to its business logic and access data so that said Media Server 24 can play the appropriate announcement to user terminal 21, and deciphers the user's answer received on Media Server 24 (Step S25 on figure 2). Media server 24 typically gives information to user terminal 21 by using announcement such as Voice over IP, video broadcasting and TTS (Text To Speech) announcement and transmits information received from user terminal by using ASR (automatic speech recognition) or DTMF (Dual-Tone Multi Frequency) to said Application Server 23. As already mentioned above, these interactions will enable an assembly of available applications in the network according to the received user service request to correctly realize said service.

Although Media Server is able to provide multimedia interactions, the major drawback of an NGN Media Server is its usual lack of ISUP and IN CS-x interface and hence its unfitness for a TDM network in which IN CS-x protocol is still used to communicate with users. Indeed, such Media Servers are not able to perform interactions with users such as Play Announcement or Prompt and Collect User Input (PCUI) commands when user wants to access a service using conventional TDM network protocol.

Since it appears impossible to quickly replace all TDM Intelligent Networks by such NGN networks, manufacturers and service providers have consequently to go on working with both types of network. The current solution is to deploy one or a plurality of SRF nodes in classical TDM Intelligent Networks in order to perform announcements and/or collect user input and to develop in parallel Media Servers to provide announcements and collect user input to be used in NGN networks. This solution is expensive because it needs a dedicated network element for TDM network and a dedicated network element for VolP network.

To avoid manufacturers having to develop two types of intelligent peripherals in parallel, it would be interesting to implement also in TDM network intelligent peripherals initially developed for use in NGN. Indeed, to go on deploying SRF modules in networks while this kind of equipment is doomed to be replaced for reasons of performance, is extremely costly for operators.

Nevertheless, the solution consisting in implementing TDM oriented interfaces into Media Servers is also not satisfactory since this Media Server is usually deployed in an NGN network. Providing such an interface may complicate their hardware and software architecture and induce extra costs. Such a solution is proposed in KR20070052956.

The aim of the present invention is to enable a user to interact with a NGN oriented Media Server while user service request is realized from a user terminal being in a TDM network and only provided with common TDM functionalities.

To this end, a first object of the invention is a method for enabling a user to interact at a user terminal with a Media Server through a TDM network, said Media Sever being adapted to exchange signals according to only a first protocol type, said TDM network comprising a Service Switching Point or SSP and a Service Control Point or SCP, said user terminal, said SSP and said SCP being adapted to exchange signals according to a second protocol type, said method comprising the following steps:
- Establishing a first session between said SCP and said Media Server using said first protocol type;
- Establishing a second session between said SSP and said Media Server through a conversion module adapted to convert messages from said first or second protocol type to said second or first protocol type, said second session being used for establishing a communication path between said user terminal and said Media Server;

- Correlating at said Media Server said first session with said second session;
- Controlling interactions between said user terminal and said Media Server on said communication path using control signals transmitted to said Media Server within first session, said control signals depending on information received by said Media Server from said user terminal within said second session.

Advantageously:
- said first session is used for retrieving from said Media Server a correlation information identifying said Media Server and said first session;
- said second session is used for transmitting said correlation information from SSP to said Media Server; and
- said step of correlating said first session with said second session consists in using said co-relation information.

A second object of the invention is a system for implementing the method, characterised in that it comprises said Media Server, said terminal user, said Service Switching Point or SSP and said Service Control point SCP of said TDM network, and in that:
- Said SCP is adapted to establish said first session with said Media Server according to said first protocol and to control interaction between said user terminal and said Media Server within said first session according to information received by said Media Server from said user terminal within said second session.
- Said SSP is adapted to establish said second session with said Media Server through a conversion module, said second session being used for establishing a communication path between said user terminal and said Media Server;
- Said Media Server is adapted to correlate said first session with said second session.

The features and advantages of the invention will become more apparent from the following detailed description with reference to the attached figures wherein:
- Figure 1, already described, represents a schematic architecture of different elements involved in a classical TDM Intelligent Network for delivering to a user an access to a service.
- Figure 2, already described, represents a schematic architecture of different elements involved in a NGN Intelligent Network for delivering to a user an access to a service.
- FIG 3 represents schematically a specific preferred architecture of different elements involved for delivering to a user an access to a service according to the system of the invention.

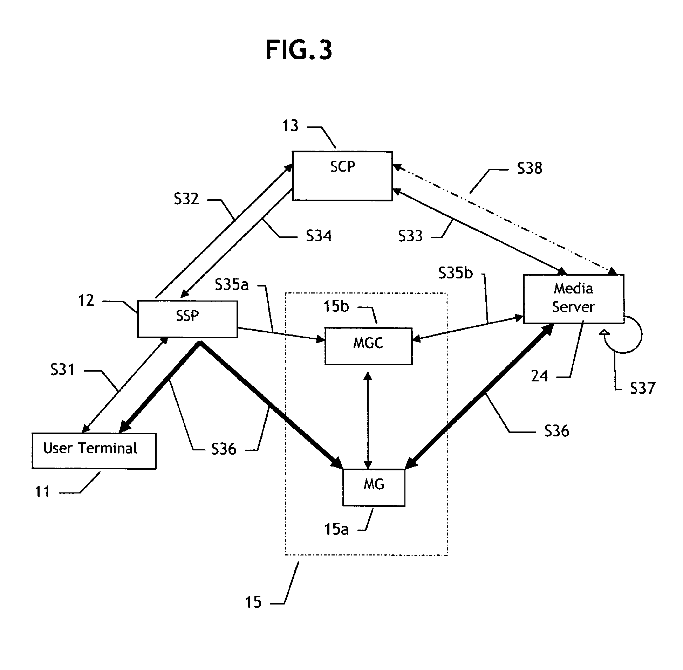

As shown in figure 3, the architecture classically comprises TDM network elements already described with figure 1, namely:
- User terminal 11 from which a user can request;
- Switching element or SSP 12;
- Control element or SCP 13.
All these elements are adapted to exchange signals according to TDM protocols (ISUP, INAP).

According to the invention, the system also comprises:
- an oriented NGN Media Server 24, with which said user terminal 11 will be able to interact thanks to the invention, said Media Server 24 being adapted to exchange signals according to IP oriented protocols;
- A conversion module 15, whose function will be explained later.

First steps of the method for enabling the user to access to a service according to the invention are similar to what has been previously disclosed with reference to figure 1. More precisely, when a user wants to access a service provided by the network, he dials on user terminal 11 the call number of the desired service. A dialogue is then established between terminal user 11 and SSP 12 (Step S31 on figure 3). Upon receiving the dialed number from user terminal 11, SSP 12 sends the Initial DP message to SCP 13 using INAP protocol (Step S32 on figure 3), said message comprising essentially the service call number dialed on user terminal 11 and the line identification of user terminal 11.

The method according to the invention differs then from the method according to figure 1 due to the fact that there is no SRF, but a Media Server 24 for interacting with the user.

Upon reception of Initial DP message, SCP 13 establishes a first communication session with said Media Server 24 (Step S33 on figure 3). This first session must be made using the IP protocols understood by Media Server 24. Therefore, SCP 13 of the invention is provided with at least two interfaces: a first interface for exchanging information with SSP 12 using TDM protocols and a second interface for exchanging information using IP protocol with Media Server 24. First session is a SIP session within which SCP 13 typically sends a INVITE message, but contrary to SIP session between Application Server 23 and Media server 24 of pure NGN network shown in figure 2, there is no, in this case, SDP information transmitted by SCP 13 to Media Server 24. Upon detection of the absence of SDP information, Media Server 24 is able to determine that no IP flow and particularly no RTP flow can be established directly with said user terminal 11. However, Media Server 24 accepts the SIP INVITE message sent by SCP 13 and sends back a SIP 200 OK message to said SCP 13 which corresponds to an acceptation message. Said acceptation message is advantageously used for transmitting a correlation information which identifies both Media Server 24 and first session. This correlation information, the purpose of which will be explained later, may be a message encoded on sixteen digits with ten digits representing the routing number of Media Server 24 and six digits representing identification number of said SIP session.

Once retrieved by SCP 13, said correlation information is then transmitted to SSP 12, for instance, by using a CONNECT message (Step S34 on figure 3).

At this stage, SSP 12 is able to determine, by analysing routing number of proposed Media Server 24, that the address does not correspond to a classical SRF but to a Media Server 24 with no capacity to directly interact with user terminal 11.

Then, a second session between said SSP 12 and said Media Server 24 is established through conversion module 15, which is adapted to convert messages from TDM protocol to IP protocol and vice versa. Said second session is used for transmitting a message comprising said correlation information from SSP 12 to Media Server 24 (Step 35 on figure 3), and for establishing a communication path between user terminal 11 and Media Server 24 (Step 36 on figure 3).

Within said second session, as shown on figure 3, links between SSP 12 and Media Server 24 and communication path between said user terminal 11 and Media Server 24 are composed of two portions, a TDM portion from respectively SSP 12 and user terminal 11 to conversion module 15 and an IP portion from conversion module 15 to Media Server 24.

For establishing second session, SSP 12 sends a connection request, for instance an IAM request, using ISUP protocol to conversion module 15 (Step S35a on figure 3). The connection request essentially comprises the number dialed on user terminal 11, the line identification of user terminal 11 and type of service (speech or data) to be used. According to the invention, the connection request additionally comprises the correlation information created in the first SIP session between said Media Server 24 and SCP 13. Conversion module 15 receives on a first SS7 interface said connection request, converts it into a SIP INVITE message and sends the converted message to Media Server 24 from a second IP interface (Step S35b on figure 3). SIP INVITE message consists mainly in prompting Media Server 24 to communicate with user terminal 11, and according to the invention, transmitting correlation information to Media Server 24 and giving flow type information such as SDP information which are necessary for establishing the communication path (Step S36 on figure 3). Said communication path comprises a TDM portion from user terminal 11 to conversion module 15 and a RTP portion from conversion module 15 and Media Server 24.

Once the communication path within second SIP session has been established, Media Server 24 can perform a correlation between first and second SIP sessions (Step 37 on figure 3). The correlation is based on the correlation information created by said Media Server 24 in the first SIP session and sent back to Media Server 24 in second SIP session. This correlation enables Media Server 24 to identify that control information coming from SCP 13 via said first SIP session and signalisation information coming from SSP 12 through conversion module 15 via said second SIP session concern same user terminal 11.

Once correlation has been made, SCP 13 can control interactions between user terminal 11 and Media Server 24 on said communication path (Step 38 on figure 3). Said control is performed by using control signals transmitted to Media Server 24 via first session, said control signals depending on information received by Media Server 24 from said terminal user 11 within second session.

More specifically, according to signals control done over SIP by sending MSML inside INFO message via first session, SCP 13 has announcement realized by said Media Server 24 in a RTP flow which is converted by conversion module 15 so that user terminal 11 can receive announcement in a supported classical TDM transmission. Controls signals can take into account collect user input commands such ASR (automatic speech recognition), TTS (Text to speech) realized in a IP environment while common TDM user input realized on terminal user 11 having being converted in to appropriate information supported by Media Server 24. According to the invention, an interaction between a common TDM user terminal 11 and a Media Server 24 can be realized and thus the network correctly provides the requested service by sending to user and receiving from user more precisions concerning this service.

Once SCP 13 has given precision to terminal user 11 and collected information by controlling Media Server 24, it is able to exactly determine what terminal user 11 needs and will connect it to destination in network which is adapted to perform the service initially requested. At this time, Media Server 24, having already played its role, does not need to have to interact anymore with said terminal user. For that reason, Media Server 24 connection is preferentially broken and a Disconnect operation is realized to disconnect Media server 24.

One of the advantages of the method according to the invention is that it can be performed with classical TDM network elements such as SCP 13 and SSP 12 and classical NGN network elements such as Media Server 24 which are provided with little adaptation.

Typically, SCP 13 for use in the on the system according to the invention is implemented with at least two interfaces and a conversion module. First and second interfaces are respectively used for exchanging information with classical TDM elements using TDM protocols and for exchanging information with NGN classical elements using IP oriented protocols, and processing module is used to perform a conversion between these two protocol types. In an alternative way, not shown on Figure 3, the control element of the architecture may also be a SIP/IMS Application Server.

SSP 12 of the architecture of figure 3 is advantageously provided with a switching module adapted to process correlation information so that SSP 12 can establish a session with said element through a conversion module 15, when routing number comprised in said correlation information is associated to a element with no capacity to directly interact with user terminal 11.

Media Server 24, according to the invention, is provided with a determination module adapted to determine that no flow transmission type such as SDP information are within a session SIP with a Service Control Point, and with a correlation module adapted to correlate two SIP sessions established with two different elements.

Advantageously, conversion module 15 is a gateway which comprises two conventional elements:
- a first translation element 15a known as a Media Gateway or MG. This element is used to connect different types of networks and its main function is to realize a conversion between different transmission types and coding techniques such as speech signals and DTMF in to Voice over IP conversion.
- a second control element 15b known as a Media Gateway Controller or MGC. This element is used to receive and transmit signalisation and routing information and to control Media Gateway. Signalisation information conversion is performed through several interfaces which can be used with different protocols such as IP interfaces enabling SIP exchanges and common SS7 interfaces for interconnection with classical TDM network.

In one embodiment, gateway 15 and Media Server 24 may be elements of NGN network.

In addition, architecture represented on figure 3 comprises a single intelligent peripheral, more precisely a Media Server 24. Alternatively, method of the invention can be also implemented in a architecture comprising a plurality of intelligent peripherals such as SRF and Media Servers adapted to be controlled by the SCP 13. In this case, SCP 13 performs a selection of the intelligent peripheral supposed to perform the most adapted interaction with user terminal 11 according to said requested service. Such a selection can be realized at SCP 13 by analysing said Initial DP message received from SSP 12. Since message received by SCP 13 is an INAP encoded message, SCP 13 is able to determine that the most appropriate intelligent peripheral should be able to interact with said user terminal 11 using INCS-1 protocol for playing appropriate announcement and PCUI commands. Such an intelligent peripheral is commonly an SRF.

According to a data base comprising a list of intelligent peripherals present in the network it is embedded with, SCP 13 can determine presence or absence of a SRF. If an available SRF is present, interaction are realized between SRF 14 and user terminal 11 under the classical TDM control of SCP 13 performs a classical TDM control similar to what has been previously disclosed with reference to figure 1. If no SRF is available (no SRF is present or SRF is damaged, fully load, etc...) in the network, SCP 13 then selects a Media Server according to criteria such as, among other, data concerning Media Server associated functions, data Media Server availabilities or data Media Server network addresses comprised in SCP 13 databases. Based on these criteria a Media Server 24 is selected to perform an interaction with terminal user 11 under control of SCP 13 according to what has been previously disclosed with reference to figure 3.

## Claims

1. Method for enabling a user to interact at a user terminal (11) with a Media Server (24) through a TDM network, said Media Sever (24) being adapted to exchange signals according to only a first protocol type, said TDM network comprising a Service Switching Point or SSP (12) and a Service Control Point or SCP (13), said user terminal (11), said SSP (12) and said SCP (13) being adapted to exchange signals according to a second protocol type, said method comprising the following steps:
- Establishing (S33) a first session between said SCP (13) and said Media Server (24) using said first protocol type;
- Establishing a second session between said SSP (12) and said Media Server (24) through a conversion module (15) adapted to convert messages from said first or second protocol type to said second or first protocol type, said second session being used for establishing (S36) a communication path between said user terminal (11) and said Media Server (24);
- Correlating (S37) at said Media Server (24) said first session with said second session;
- Controlling (S38) interactions between said user terminal (11) and said Media Server (24) on said communication path using control signals transmitted to said Media Server (24) within first session, said control signals depending on information received by said Media Server (24) from said user terminal (11) within said second session.

2. The method as claimed in claim 1, **characterised in that**:
- said first session is used for retrieving from said Media Server (24) a correlation information identifying said Media Server (24) and said first session;
- said second session is used for transmitting (S35) said correlation information from SSP (12) to said Media Server (24); and
- said step of correlating (S37) said first session with said second session consists in using said co-relation information.

3. The method as claimed in claim 2, **characterised in that** said correlation information comprises the routing number of said Media Server (24) and an identification number of said first session.

4. The method as claimed in claim 3, **characterised in that** said correlation information is a 16-digit number in which ten digits are used for said routing number and six digits are used for said identification number.

5. The method as claimed in anyone of claim 3 or 4, **characterised in that** the step of establishing said second session in realized upon said SSP (12) has determined that said Media Server (24) is not a conventional TDM network according to said transmitted routing number.

6. The method as claimed in anyone of the preceding claims, **characterised in that** said first protocol type comprises SIP and/or RTP protocols.

7. The method as claimed in anyone of the preceding claims, **characterised in that** said second protocol type comprises INAP and/or ISUP protocols.

8. The method as claimed in claims 2 and 6, **characterised in that** the step of establishing said first session comprises transmission of a message from said SCP (13) to said Media Server (24) and that said correlation information is generated by said Media Server (24) and transmitted to said SCP (13) via said first session upon determination that no SDP information is present in said message.

9. The method as claimed in combined claims 2, 6 and 7, **characterised in that** the step of establishing said second session comprises the following steps:
- Sending an ISUP command from SSP (12) to said conversion module (15);
- Converting at said conversion module (15) said ISUP command into a SIP message;
- Sending converted SIP message to said Media Server (24);
and **in that** the step of establishing a communication path comprises:
- Establishing a TDM oriented communication path between said terminal user (11) and said conversion module (15); and
- Establishing a IP oriented communication path using a RTP flow between said conversion module (15) and said Media Server (24).

10. The method as claimed in anyone of the preceding claims, **characterised in that** the step of establishing first session is realized upon reception (S31, S32) at said SCP (13) of a service request from said user terminal (11) and upon said SCP (13) has determined that Media Server (24) is the most appropriate peripheral to interact with said terminal user (11) according to said service request.

11. A System for implementing the method of claim 1, **characterised in that** it comprises said Media server (24), said terminal user (11), said Service Switching Point or SSP (12) and said Service Control point SCP (13) of said TDM network, and said conversion module (15), and **in that**:
- said SCP (13) is adapted:
o to establish said first session with said Media Server (24) according to said first protocol;
o to control interaction between said user terminal (11) and said Media Server (24) within said first session according to information received by Said Media Server (24) from said user terminal (11) within said second session.
- said SSP (12) is adapted to establish said second session with said Media Server (24) through said conversion module (15), said second session being used for establishing a communication path between said user terminal (11) and said Media Server (24);
- said Media Server (24) is adapted to correlate said first session with said second session.

12. The system as claimed in claim 11, wherein said conversion module (15) is a gateway comprising:
- a Media Gateway Controller or MGC (15a) adapted to convert TDM signalling information into SIP messages or SIP messages into TDM signalling information; and
- a Media Gateway or MG (15b) adapted to convert TDM type communication to RTP flow or RTP flow into TDM type communication

13. The system as claimed in anyone of claims 11 to 12, **characterised in that** said Media Server (24) is an element of a NGN network.

14. The system as claimed in anyone of claims 11 to 13, **characterised in that** said conversion module (15) is an element of a NGN network.

## Patentansprüche

1. Verfahren, welches es einem Benutzer ermöglicht, an einem Benutzerendgerät (11) über ein TDM-Netzwerk mit einem Media-Server (24) zusammenzuwirken, wobei der besagte Media-Server (24) dazu ausgelegt ist, Signale ausschließlich gemäß einem ersten Protokolltyp auszutauschen, wobei das besagte TDM-Netzwerk einen Dienstvermittlungspunkt oder SSP (12) und einen Dienststeuerpunkt oder SCP (13) umfasst, wobei das besagte Benutzerendgerät (11), der besagte SSP (12) und der besagte SCP (13) dazu ausgelegt sind, Signale gemäß einem zweiten Protokolltyp auszutauschen, wobei das besagte Verfahren die folgenden Schritte umfasst:
- Aufbauen (S33) einer ersten Sitzung zwischen dem besagten SCP (13) und dem besagten Media-Server (24) unter Verwendung des besagten ersten Protokolltyps;
- Aufbauen einer zweiten Sitzung zwischen dem besagten SSP (12) und dem besagten Media-Server (24) anhand eines Umsetzermoduls (15), welches dazu ausgelegt ist, Nachrichten von dem besagten ersten oder dem besagten zweiten Protokolltyp in den besagten zweiten oder den besagten ersten Protokolltyp umzuwandeln, wobei die besagte zweite Sitzung für den Aufbau (S36) eines Kommunikationspfads zwischen dem besagten Benutzerendgerät (11) und dem besagten Media-Server (24) benutzt wird;
- Korrelieren (S37), an dem besagten Media-Server (24), der besagten ersten Sitzung mit der besagten zweiten Sitzung;
- Steuern (S38) des Zusammenwirkens zwischen dem besagten Benutzerendgerät (11) und dem besagten Media-Server (24) auf dem besagten Kommunikationspfad unter Verwendung von an den besagten Media-Server (24) während der ersten Sitzung übertragenen Steuersignalen, wobei die besagten Steuersignale von an dem besagten Media-Server (24) während der besagten zweiten Sitzung von dem besagten Benutzerendgerät (11) empfangenen Informationen abhängig sind.

2. Das Verfahren nach Anspruch 1, **dadurch gekennzeichnet, dass**:
- Die besagte erste Sitzung für das Abrufen, aus dem besagten Media-Server (24), von Korrelationsinformationen, welche den besagten Media-Server (24) und die besagte erste Sitzung identifizieren, benutzt wird;
- die besagte zweite Sitzung für die Übertragung (S35) der besagten Korrelationsinformationen von dem SSP (12) an den besagten Media Server (24) benutzt wird; und
- der besagte Schritt des Korrelierens (S37) der besagten ersten Sitzung mit der besagten zweiten Sitzung in der Verwendung der besagten Korrelationsinformationen besteht.

3. Das Verfahren nach Anspruch 2, **dadurch gekennzeichnet, dass** die besagten Korrelationsinformationen die Leitwegnummer des besagten Media-Servers (24) und eine Identifikationsnummer der besagten ersten Sitzung enthalten.

4. Das Verfahren nach Anspruch 3, **dadurch gekennzeichnet, dass** die besagten Korrelationsinformationen aus einer 16-stelligen Zahl bestehen, in welcher zehn Ziffern für die besagte Leitwegnummer und sechs Ziffern für die besagte Identifikationsnummer benutzt werden.

5. Das Verfahren nach einem beliebigen der Ansprüche 3 oder 4, **dadurch gekennzeichnet, dass** der Schritt des Aufbauens der besagten zweiten Sitzung durchgeführt wird (is), nachdem der besagte SSP (12) ermittelt hat, dass der besagte Media-Server (24) gemäß der besagten übertragenen Leitwegnummer kein herkömmliches TDM-Netzwerk ist.

6. Das Verfahren nach einem beliebigen der vorstehenden Ansprüche, **dadurch gekennzeichnet, dass** der besagte erste Protokolltyp SIP- und/oder RTP-Protokolle umfasst.

7. Das Verfahren nach einem beliebigen der vorstehenden Ansprüche, **dadurch gekennzeichnet, dass** der besagte zweite Protokolltyp INAP- und/oder ISUP-Protokolle umfasst.

8. Das Verfahren nach den Ansprüchen 2 und 6, **dadurch gekennzeichnet, dass** der Schritt des Aufbauens der besagten ersten Sitzung das Übertragen einer Nachricht von dem besagten SCP (13) an den besagten Media-Server (24) umfasst, und dass die besagten Korrelationsinformationen von dem besagten Media-Server (24) erzeugt und, nachdem ermittelt wurde, dass die besagte Nachricht keine SDP-Informationen enthält, über die besagte erste Sitzung an den besagten SCP (13) übertragen werden.

9. Das Verfahren nach den kombinierten Ansprüchen 2, 6 und 7, **dadurch gekennzeichnet, dass** der Schritt des Aufbauens der besagten zweiten Sitzung die folgenden Schritte umfasst:
- Senden eines ISUP-Befehls von dem SSP (12) an das besagte Umsetzermodul (15);
- Umwandeln, an dem besagten Umsetzermodul (15), des besagten ISUP-Befehls in eine SIP-Nachricht;
- Senden der umgewandelten SIP-Nachricht an den besagten Media-Server (24); und dass der Schritt des Aufbauens eines Kommunikationspfads umfasst:
- Aufbauen eines TMD-orientierten Kommunikationspfads zwischen dem besagten Benutzerendgerät (user terminal) (11) und dem besagten Umsetzermodul (15); und
- Aufbauen eines IP-orientierten Kommunikationspfads unter Verwendung eines RTP-Flusses zwischen dem besagten Umsetzermodul (15) und dem besagten Media-Server (24).

10. Das Verfahren nach einem beliebigen der vorstehenden Ansprüche, **dadurch gekennzeichnet, dass** der Schritt des Aufbauens der ersten Sitzung nach dem Empfang (S31, S32), an dem besagten SCP (13), einer Dienstanforderung von dem besagten Benutzerendgerät (11) und nachdem der besagte SCP (13) bestimmt hat, dass der Media-Server (24) das geeignetste Peripheriegerät ist, um mit dem besagten Benutzerendgerät (user terminal) (11) gemäß der besagten Dienstanforderung zusammenzuwirken, erfolgt.

11. System zur Durchführung des Verfahrens nach Anspruch 1, **dadurch gekennzeichnet, dass** es den besagten Media-Server (24), das besagte Benutzerendgerät (
user terminal) (11), den besagten Dienstvermittlungspunkt oder SSP (12) und den besagten Dienststeuerpunkt oder SCP (13) des besagten TDM-Netzwerks sowie das besagte Umsetzermodul (15) umfasst, und dass:
- der besagte SCP (13) ausgelegt ist für:
o den Aufbau der besagten ersten Sitzung mit dem besagten Media-Server (24) gemäß dem besagten ersten Protokoll;
o die Steuerung des Zusammenwirkens zwischen dem besagten Benutzerendgerät (11) und dem besagten Media-Server (24) innerhalb der besagten ersten Sitzung gemäß den innerhalb der besagten zweiten Sitzung an dem besagten Media-Server (24) empfangenen Informationen von dem besagten Benutzerterminal (11),
- der besagte SSP (12) dazu ausgelegt ist, die besagte zweite Sitzung über das besagte Umsetzermodul (15) mit dem besagten Media-Server (24) aufzubauen, wobei die besagte zweite Sitzung für den Aufbau eines Kommunikationspfads zwischen dem besagten Benutzerendgerät (11) und dem besagten Media-Server (24) benutzt wird;
- der besagte Media-Server (24) für das Korrelieren der besagten ersten Sitzung mit der besagten zweiten Sitzung ausgelegt ist.

12. Das System nach Anspruch 11, wobei das besagte Umsetzermodul (15) ein Gateway ist, welches umfasst:
- Eine Media-Gateway-Steuerung oder MGC (15a), welche dazu ausgelegt ist, TDM-Signalisierungsinformationen in SIP-Nachrichten oder SIP-Nachrichten in TDM-Signalisierungsinformationen umzuwandeln; und
- ein Media-Gateway oder MG (15b), welches dazu ausgelegt ist, Kommunikationen vom Typ TDM in RTP-Flüsse oder RTP-Flüsse in Kommunikationen vom Typ TDM umzuwandeln.

13. Das System nach einem beliebigen der Ansprüche 11 bis 12, **dadurch gekennzeichnet, dass** der besagte Media-Server (24) ein Element eines NGN-Netzwerks ist.

14. Das System nach einem beliebigen der Ansprüche 11 bis 13, **dadurch gekennzeichnet, dass** das besagte Umsetzermodul (15) ein Element eines NGN-Netzwerks ist.

## Revendications

1. Procédé permettant à un utilisateur d'interagir au niveau d'un terminal utilisateur (11) avec un Serveur Média (24) à travers un réseau TDM, ledit Serveur Média (24) étant adapté pour échanger des signaux selon un premier type de protocole uniquement, ledit réseau TDM comprenant un Commutateur d'Accès aux Services ou SSP (12) et un Point de Commande de Services ou SCP (13), ledit terminal utilisateur (11), ledit SSP (12) et ledit SCP (13) étant adaptés pour échanger des signaux selon un deuxième type de protocole, ledit procédé comprenant les étapes suivantes :
- Etablir (S33) une première session entre ledit SCP (13) et ledit Serveur Média (24) en utilisant ledit premier type de protocole ;
- Etablir une deuxième session entre ledit SSP (12) et ledit Serveur Média (24) à travers un module de conversion (15) adapté pour convertir des messages depuis ledit premier ou deuxième type de protocole, ladite deuxième session étant utilisée pour établir (S36) un trajet de communication entre ledit terminal utilisateur et (11) ledit Serveur Média (24) ;
- Corréler (37) au niveau dudit Serveur Média (24) ladite première session et ladite deuxième session ;
- Contrôler (S38) les interactions entre ledit terminal utilisateur (11) et ledit Serveur Média (24) sur ledit trajet de communication en utilisant les signaux de commande transmis audit Serveur Média (24) pendant la première session, lesdits signaux de commande dépendant des informations reçues par ledit Serveur Média (24) depuis ledit terminal utilisateur (11) pendant ladite deuxième session.

2. Procédé selon la revendication 1, **caractérisé en ce que** :
- ladite première session est utilisée pour récupérer depuis ledit Serveur Média (24) des informations de corrélation identifiant ledit Serveur Média (24) et ladite première session ;
- ladite deuxième session est utilisée pour transmettre (S35) lesdites informations de corrélation depuis le SSP (12) vers ledit Serveur Média (24) ; et
- ladite étape de corrélation (S37) de ladite première session et de ladite deuxième session consistant à utiliser lesdites informations de corrélation.

3. Procédé selon la revendication 2, **caractérisé en ce que** lesdites informations de corrélation comprennent le numéro d'acheminement dudit Serveur Média (24) et un numéro d'identification de ladite première session.

4. Procédé selon la revendication 3, **caractérisé en ce que** lesdites informations de corrélation sont un numéro à 16 chiffres dans lequel dix chiffres sont utilisés pour ledit numéro d'acheminement et six chiffres sont utilisés pour ledit numéro d'identification.

5. Procédé selon l'une quelconque des revendications 3 ou 4, **caractérisé en ce que** l'étape d'établissement de ladite deuxième session est réalisée (is), lorsque ledit SSP (12) a déterminé que ledit Serveur Média (24) n'est pas un réseau TDM conventionnel selon ledit numéro d'acheminement transmis.

6. Procédé selon l'une quelconque des revendications précédentes, **caractérisé en ce que** ledit premier type de protocole comprend des protocoles SIP et/ou RTP.

7. Procédé selon l'une quelconque des revendications précédentes, **caractérisé en ce que** ledit deuxième type de protocole comprend des protocoles INAP et/ou ISUP.

8. Procédé selon les revendications 2 et 6, **caractérisé en ce que** l'étape d'établissement de ladite première session comprend la transmission d'un message depuis ledit SCP (13) vers ledit Serveur Média (24) et **en ce que** lesdites informations de corrélation sont générées par ledit Serveur Média (24) et transmises audit SCP (13) par le biais de ladite première session après détermination qu'aucune information SDP n'est présente dans ledit message.

9. Procédé selon les revendications combinées 2, 6 et 7, **caractérisé en ce que** l'étape d'établissement de ladite deuxième session comprend les étapes suivantes :
- Envoi d'une commande ISUP depuis le SSP (12) vers ledit module de conversion (15) ;
- Conversion au niveau dudit module de conversion (15) de ladite commande ISUP en un message SIP ;
- Envoi du message SIP converti audit Serveur Média (24) ;
et **en ce que** l'étape d'établissement d'un trajet de communication comprend :
- Etablissement d'un trajet de communication orienté TDM entre ledit terminal utilisateur (user terminal) (11) et ledit module de conversion (15) ; et
- Etablissement d'un trajet de communication orienté IP en utilisant un flux RTP entre ledit module de conversion (15) et ledit Serveur Média (24).

10. Procédé selon l'une quelconque des revendications précédentes, **caractérisé en ce que** l'étape d'établissement de la première session est réalisée après réception (S31, S32) au niveau dudit SCP (13) d'une demande de service de la part dudit terminal utilisateur (11) et lorsque ledit SCP (13) a déterminé que le Serveur Média (24) est le périphérique le plus approprié pour interagir avec ledit terminal utilisateur (user terminal) (11) conformément à ladite demande de service.

11. Système de mise en oeuvre du procédé selon la revendication 1, **caractérisé en ce qu'**il comprend ledit Serveur Média (24), ledit terminal utilisateur (user terminal) (11), ledit Commutateur d'Accès aux Services ou SSP (12) et ledit Point de Commande de Services ou SCP (13) dudit réseau TDM, et ledit module de conversion (15), et **en ce que** :
- ledit SCP (13) est adapté pour :
o établir ladite première session avec ledit Serveur Média (24) conformément audit premier protocole ;
o contrôler l'interaction entre ledit terminal utilisateur (11) et ledit Serveur Média (24) pendant ladite première session conformément aux informations reçues par ledit Serveur Média (24) depuis ledit terminal utilisateur (11) pendant ladite deuxième session.
- ledit SSP (12) est adapté pour établir ladite deuxième session avec ledit Serveur Média (24) à travers ledit module de conversion (15), ladite deuxième session étant utilisée pour établir un trajet de communication entre ledit terminal utilisateur (11) et ledit Serveur Média (24) ;
- ledit Serveur Média (24) est adapté pour corréler ladite première session et ladite deuxième session.

12. Système selon la revendication 11, dans lequel ledit module de conversion (15) est une passerelle comprenant :
- un contrôleur de passerelle de support ou MGC (15a) adapté pour convertir des informations de signalisation TDM en messages SIP ou des messages SIP en informations de signalisation TDM ; et
- une passerelle de support ou MG (15b) adaptée pour convertir une communication de type TDM en flux RTP ou un flux RTP en communication de type TDM.

13. Système selon l'une quelconque des revendications 11 à 12, **caractérisé en ce que** ledit Serveur Média (24) est un élément d'un réseau NGN.

14. Système selon l'une quelconque des revendications 11 à 13, **caractérisé en ce que** ledit module de conversion (15) est un élément d'un réseau NGN.
